# EUROPÄISCHE PATENTSCHRIFT

(11) **EP 0 628 013 B1**
(45) Veröffentlichungstag und Bekanntmachung des Hinweises auf die Patenterteilung: **24.03.1999**
(21) Anmeldenummer: 94902671.0
(22) Anmeldetag: 03.12.1993
(51) Int. Cl.: B65H 75/22

(54) **SPULE ZUR AUFNAHME VON LANGGESTRECKTEM WICKELGUT**
BOBBIN FOR RECEIVING ELONGATED WINDING MATERIAL
BOBINE POUR LA RECEPTION DE MATIERES ALLONGEES A ENROULER

(30) Priorität: 04.12.1992 WO PCT/EP92/02804
(43) Veröffentlichungstag der Anmeldung: 14.12.1994
(73) Patentinhaber: MASCHINENFABRIK NIEHOFF GMBH & CO. KG, D-91124 Schwabach (DE)
(72) Erfinder: ECK, Werner, D-91074 Herzogenaurach (DE); HÖRNDLER, Hans-Georg, D-91126 Barthelmesaurach (DE); LEPACH, Werner, D-91126 Schwabach (DE)
(74) Vertreter: Wallinger, Michael, Dr.-Ing.
(86) Internationale Anmeldenummer: EP9303404
(87) Internationale Veröffentlichungsnummer: WO9413570

(56) Entgegenhaltungen:
- EP-A- 0 504 503
- DE-A- 2 822 213
- DE-C- 3 712 680
- US-A- 3 822 841

## Beschreibung

Die vorliegende Erfindung betrifft eine Spule zur Aufnahme von langgestrecktem Wickelgut. Langgestrecktes Wickelgut soll hier vorzugsweise als Wickelgut verstanden werden, welches Metall, insbesondere Kupfer, enthält, wie Draht, blanke oder mit Kunststoff umhüllte Litze und dgl. Die Erfindung soll allerdings auch für Wickelgut anwendbar sein, wie z.B. Glasfaserkabe, welches sich in ännlicher Weise wickeln läßt, wie die genannten Beispiele. Zur Vereinfachung wird im folgenden derartiges langgestrecktes Wickelgut generell als Draht bezeichnet.

Draht und insbesondere Kupferdraht wird in der Regel als Gebinde transportiert, welches aus einer Metallspule und dem darauf aufgewickelten Draht besteht. Die Metallspule ist rotationssymmetrisch gestaltet und weist einen zylindrischen Wickelkern auf, an dessen beiden Enden jeweils ein Flansch angeordnet ist, wodurch ein Wickelraum zur Aufnahme des Wickelgutes definiert ist. Koaxial zur Rotationsachse der Spule ist eine durchgehende Längsbohrung vorgesehen, die sich an einem oder beiden Enden konisch erweitert. Die Wickelvorrichtungen weisen entsprechend konisch gestaltete Spulenaufnahmeelemente auf, die in die konischen Ausnehmungen der Spule eingreifen und diese während des Wickelvorgangs gleichzeitig halten und zentrieren. Das Bewickeln selbst wird vorgenommen, indem entweder die Spule rotiert, oder indem der Draht bei stillstehender Spule mittels einer Flyereinrichtung, welche um die Spule umläuft, auf die Spule aufgelegt wird. Während bei rotierender Spule das Aufwickeln des Drahtes drallfrei erfolgt, ergibt sich beim Auflegen des Drahtes mit einer Flyereinrichtung eine Eigenverdrehung des Drahtes, ein sogenannter Drall, von 360° pro Windung.

Metallspulen haben den Vorteil einer hohen Festigkeit und einer langen Lebensdauer. Dem steht jedoch als Nachteil entgegen, daß der Gewichtsanteil der Metallspule am fertigen Gebinde relativ hoch ist und daß die Metallspulen vom Drahtverwender wieder zum Drahthersteller zurücktransportiert werden müssen, was beträchtliche zusätzliche Transportkosten verursacht.

Um das Transportvolumen der spulen beim Rücktransport zu vermindern, ist verschiedentlich vorgeschlagen worden, Metallspulen oder Kunststoffspulen teilbar auszuführen, d.h., daß die Flansche nach dem Abwickeln des Wickelgutes vom eigentlichen Wickelkern abgenommen werden und getrennt verpackt werden, wodurch sich ein vermindertes Transportvolumen ergibt. Die bekannten teilbaren Spulen haben jedoch den Nachteil, daß die Montage und Demontage teilweise sehr kompliziert ist, so daß die Vorteile des verringerten Transportvolumens durch den erhöhten Arbeitsaufwand wieder aufgewogen werden. Weiterhin ist bei vielen dieser bekannten Wickelspulen die Festigkeit der zusammengebauten Spule relativ gering, so daß die Gefahr besteht, daß sich die Verbindung zwischen Flansch und Wickelkern während des Einsetzens in die Wickelmaschine, oder während des Aufwickel- oder Abwickelvorganges selbst löst, was zu erheblichen Störungen des Betreibsablaufes führt.

Die EP-A-0 504 503 A1 beschreibt ein Verfahren zum Konfektionieren von Gebinden elektrischer Leitungen, bei welchem ein konischer Wickelkern mit einem festen Flansch verwendet wird, der an der Seite des Wickelkerns mit dem größeren Durchmesser angeordnet ist. Der Wickelkern wird in einer Wickeleinrichtung derart positioniert, daß der feste Flansch mit dem größeren Durchmesser des Wickelkerns unten ist. Während der Bewicklung wird eine Platte, die Teil der Wickelvorrichtung ist, auf das obere Ende des Wickelkerns mit kleinerem Durchmesser gedrückt. Dann wird der Wickelkern der Wickelvorrichtung entnommen und mit einer Folienumhüllung versehen. Der Wickelkern weist an seinem den kleineren Durchmesser aufweisenden Ende ein mechanisches Anschlußmittel für eine dort später anzubringende, den Wickelkern abschließende, aber nicht zum Wickelkern gehörige Verschluß- bzw. Hubplatte auf.

Es ist die Aufgabe der vorliegenden Erfindung, eine Wickelspule mit abnehmbaren Flanschen zu schaffen, bei welcher die Montage und Demontage auf einfache Weise vonstatten geht, bei weicher die Verbindung aber gleichzeitig eine hohe Festigkeit aufeist.

Diese Aufgabe wird erfindungsgemäß durch den Gegenstandes des Anspruches 1 gelöst.

Zu bevorzugende weiterbildunqen der Erfindung sind Gegenstand der Unteransprüche.

Die erfindungsgemäße Wickelspule weist mindestens einen abnehmbaren Flansch auf. Die Verbindung zwischen abnehmbaren Flansch und Wickelspule erfolgt durch Rastvorsprünge, die am Wickelkern im Abstand zueinander vorgesehen sind, und die nach innen ragen. Diese Rastvorsprünge wirken im montierten Zustand mit entsprechend gestalteten Haltevorsprüngen an dem abnehmbaren Flansch zusammen.

Durch diese Gestaltung vermag die Verbindung hohe Axialkräfte aufzunehmen, so daß die Wickelspule insgesamt sehr stabil ist.

Die Rastelemente und die Haltevorsprünge werden vorzugsweise miteinander in Eingriff gebracht, indem der Wickelkern mit den Rastvorsprüngen zunächst zwischen die Haltevorsprünge gesetzt und dann im Bezug auf den Flansch verdreht wird, so daß die Haltevorsprünge und Rastvorsprünge in Eingriff miteinander kommen.

Es ist ferner wenigstens ein Verriegelungselement vorgesehen, welches in einen Zwischenraum dieser Haltevorsprünge eingreift und eine Relativbewegung von Wickelkern und abnehmbarem Flansch blockiert, nachdem die Haltevorsprünge und die Rastvorsprünge in Eingriff gekommen sind.

Bei dieser Ausführungsform ist es praktisch ausgeschlossen, daß während der üblichen Handhabung der Wickelspule und selbst auch beim Auftreten von höheren Axialkräften und Radialkräften ein Lösen der Verbindung zwischen Flansch und Wickelkern auftritt. Damit wird eine hohe Zuverlässigkeit der Verbindung erreicht.

Das Verriegelungselement kann, wie später noch erläutert wird, derart gestaltet sein, daß die Verbindung zwischen Flansch und Wickelkern mit der Hand gelöst werden kann. Es ist dann möglich, den Flansch mit einer einzigen Bewegung zu entriegeln und durch Drehen vom Wickelkern zu lösen.

Der Wickelkern kann zylindrisch oder konisch gestaltet sein. Insbesondere bei einer zylindrischen Gestaltung sind vorzugsweise beide Flansche abnehmbar. Dazu weisen dann beide Flansche identische Verriegelungsmittel auf, so daß beide Flansche gegeneinander austauschbar an den jeweiligen Enden des Wickelkerns befestigbar sind.

Insbesondere bei dieser zylindrischen Gestaltung des Wickelkerns kann der Wickelkern teilbar, und zwar teilbar entlang seiner Rotationsachse ausgestaltet sein, um das Transportvolumen der zerlegten Wickelspule weiter zu reduzieren.

Ist der Wickelkern konisch gestaltet, so wird der Wickelkern vorzugsweise so ausgeführt, daß die einzelnen Wickelkerne ineinander eingeschoben werden können, so daß sich auch dadurch eine erhebliche Reduktion des Transportvolumens ergibt.

Die Wickelspule kann in einer üblichen Wickelvorrichtung zum Aufwickeln bzw. Abwickeln des strangförmigen Gutes eingesetzt werden. Besonders bevorzugt kann die Wickelspule aber im Zusammenhang mit einer Vorrichtung verwendet werden, bei welcher die Flansche der Wickelspule während des Wickelvorganges von außen abgestützt werden.

Dies hat zum einen den Vorteil, daß die Flansche während des Wickelvorganges keinen axial gerichteten Wickeldruck aufnehmen müssen und deshalb mit geringerem Materialaufwand und damit auch mit geringem Gewicht gefertigt werden können. Zum anderen ergibt sich der wesentliche Vorteil, daß durch diese Gestaltung das Auftreten von elastischen Rückstellkräften der Flansche in Richtung auf das Wickelgut wesentlich verringert wird.

Wird eine Kunststoffspule mit üblichen konischen Einspanneinrichtungen eingespannt, können sich die Flansche während des Wickelns infolge des axialen Wickeldruckes vom Wickelkern gesehen aus nach außen verformen, da die Flansche keine Abstützung nach außen erhalten. Dadurch ergibt sich eine Rückstellkraft der Flansche, die auf die fertiggestellte Wicklung drückt und beim späteren Abwickeln des Drahtes zu Ablaufproblemen führen kann. Wird die Verformung der Flansche während des Wickelns jedoch durch diese Gestaltung verhindert, entsteht keine elastische Rückstellkraft und keine Belastung des Gebindes und es kann eine Umreifung des fertigen Gebindes oder eine Kunststoffumhüllung entfallen.

Weitere Vorteile, Merkmale und Anwendungsmöglichkeiten der vorliegenden Erfindung ergeben sich aus der nachfolgenden Beschreibung von Ausführungsbeispielen in Zusammenhang mit der Zeichnung. Darin zeigen in schematisierter Weise:
- Fig. 1: eine Schnittdarstellung eines ersten Ausführungsbeispiels einer Wickelspule gemäß der Erfindung, entlang der Linie II-II in Fig. 3;
- Fig. 2: eine vergrößerte Teildarstellung der Wickelspule gemäß Fig. 1;
- Fig. 3: eine Unteransicht des lösbaren Flansches der Wickelspule gemäß Fig. 1, wobei Unteransicht von der dem Wickelkern abgewandten Seite des Flansches aus gesehen, bedeutet;
- Fig. 4: eine Teilansicht des lösbaren Flansches gemäß

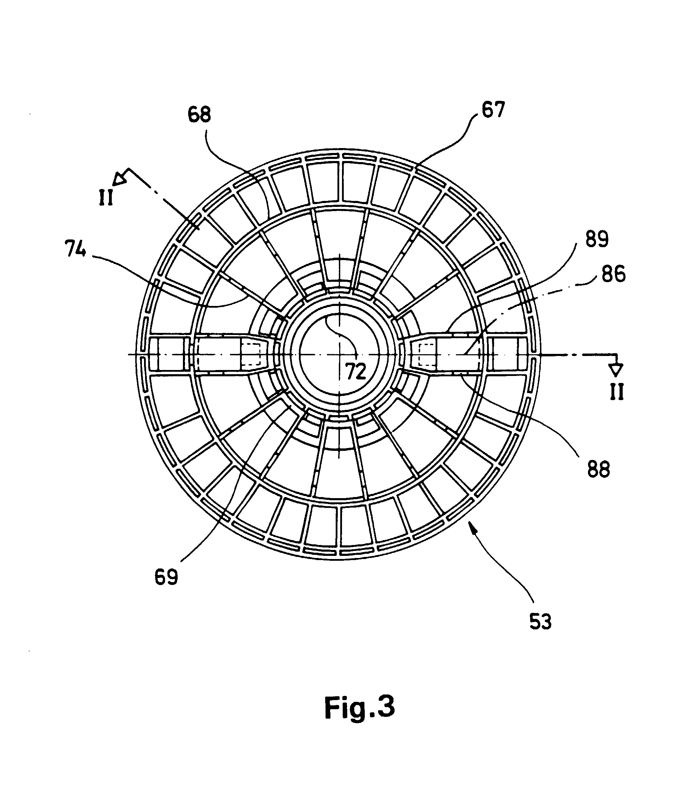

Fig. 3, von der oberen Seite aus gesehen, wobei der Wickelkern nicht mit eingezeichnet ist;

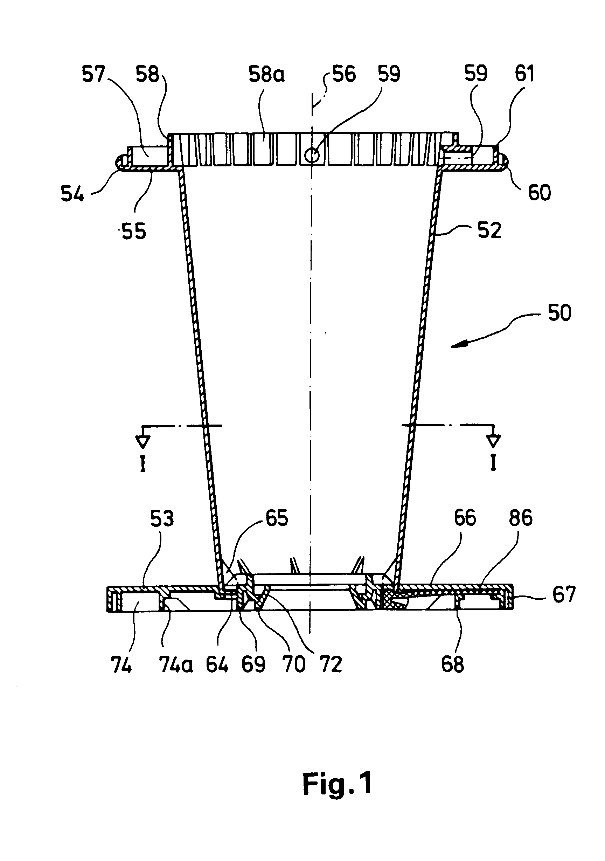

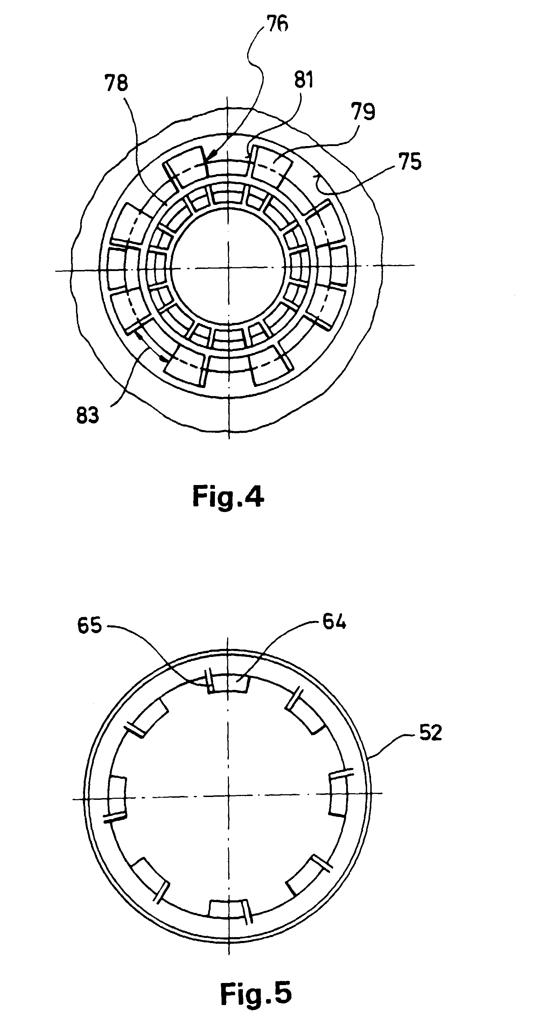

- Fig. 5: eine Schnittansicht durch den Wickelkern entlang der Linie I-I in Fig. 1, wobei der untere Flansch hier weggelassen ist;

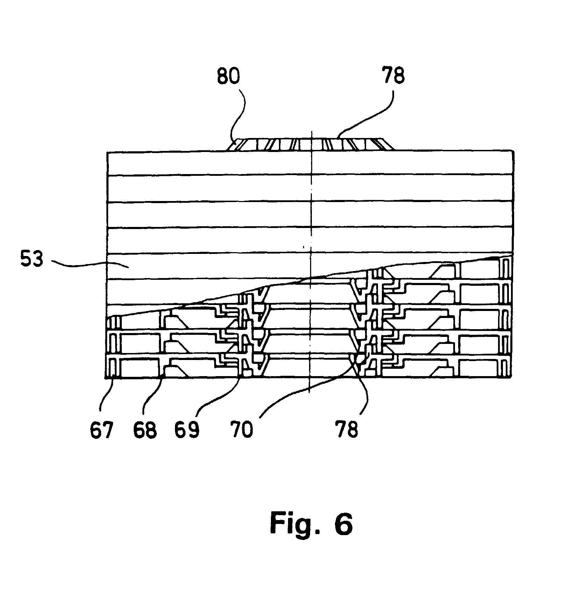

- Fig. 6: eine Anzahl von lösbaren Flanschen der Wickelspule gemäß Fig. 1, im aufeinandergestapelten Zustand;

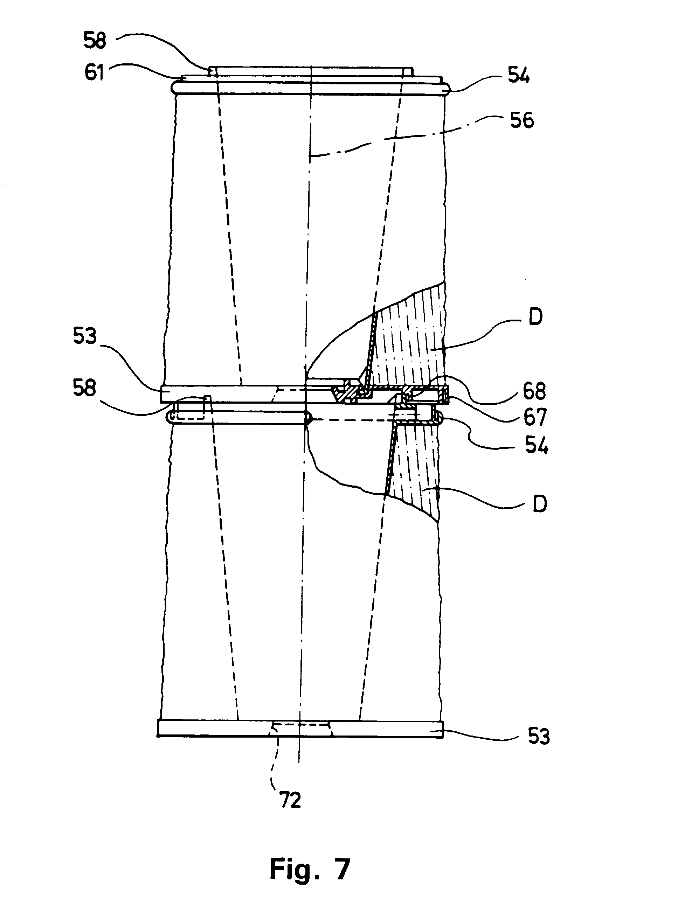

- Fig. 7: eine Darstellung, in welcher gezeigt ist, wie bewickelte Wickelspulen des Ausführungsbeispiels gemäß Fig. 1 aufeinandergestapelt werden;

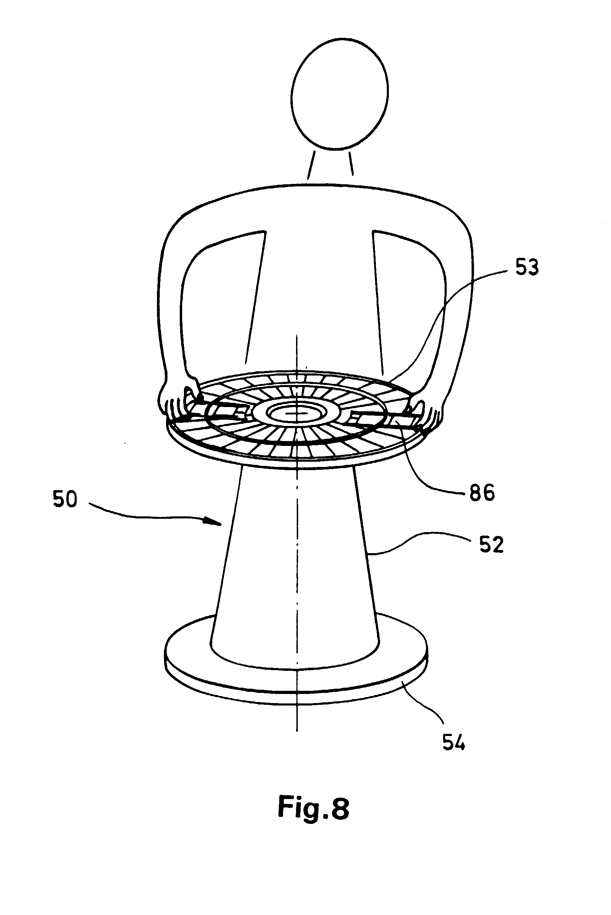

- Fig. 8: die Montage des lösbaren Flansches bei einer Wickelspule des Ausführungsbeispieles gemäß Fig. 1;

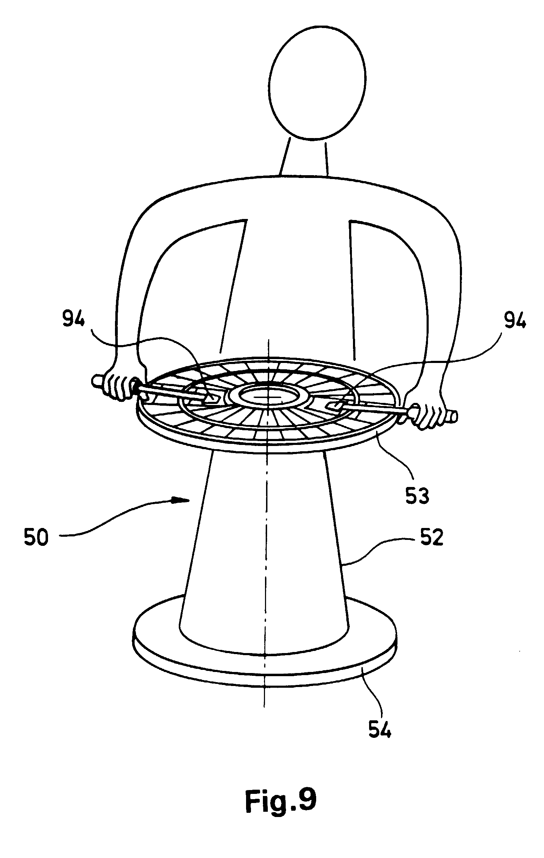

- Fig. 9: die Demontage des lösbaren Flansches bei einer Wickelspule des Ausführungsbeispiels gemäß Fig. 1;

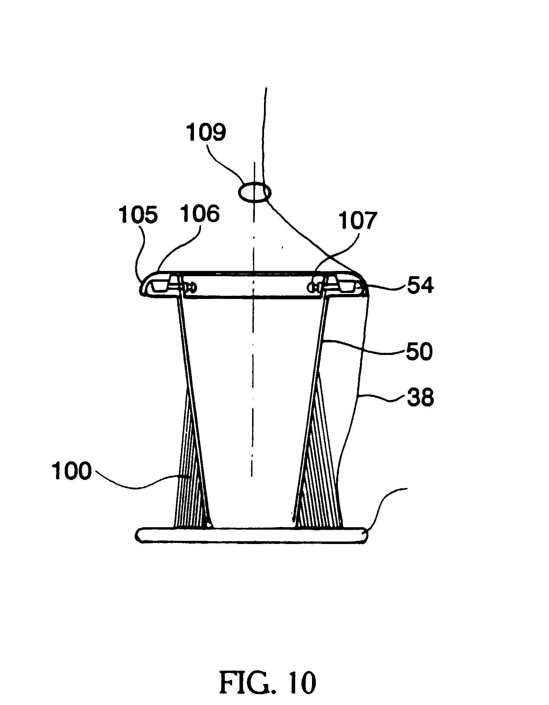

- Fig. 10: die Schnittansicht einer Ablaufeinrichtung in Verwendung mit dem ersten Ausführungsbeispiel;

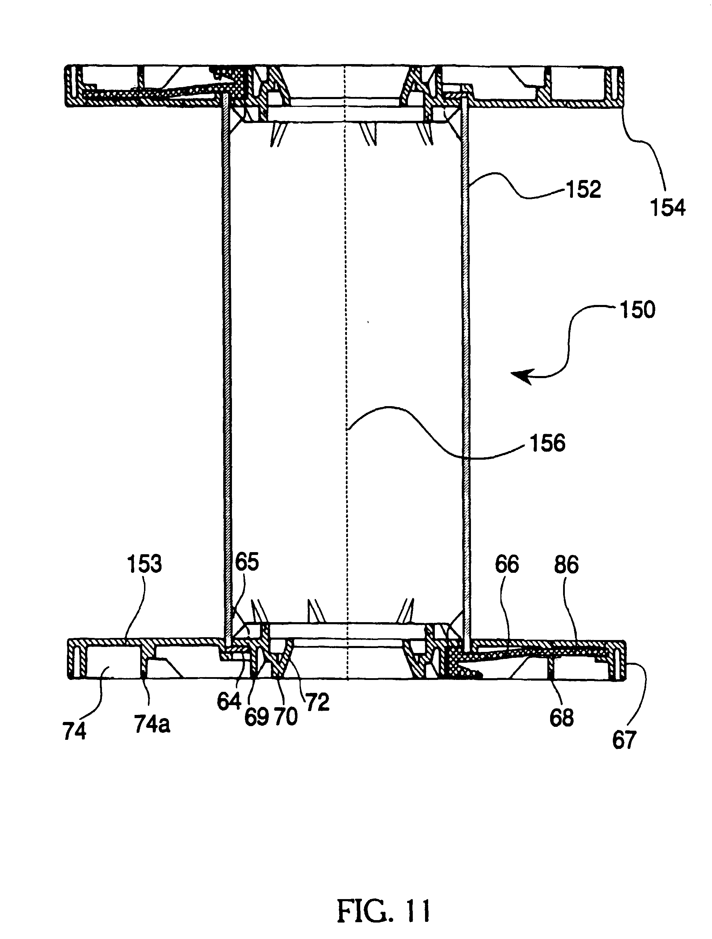

- Fig. 11: ein zweites Ausführungsbeispiel der erfindungsgemäßen Spule in einer Schnittansicht entsprechend Fig. 1;

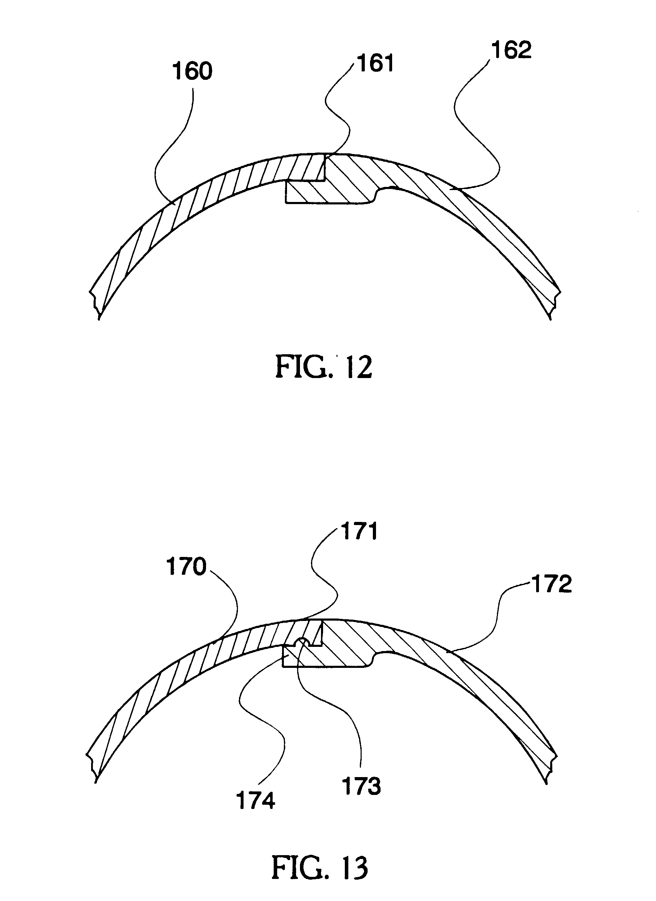

- Fig. 12: ein erstes Ausführungsbeispiel einer Verbindungseinrichtung des Ausführungsbeispieles gemäß Fig. 11 mit einem in Längsrichtung teilbaren Wickelkern;
- Fig. 13: eine Abwandlung des Ausführungsbeispiel gemäß Fig. 12;

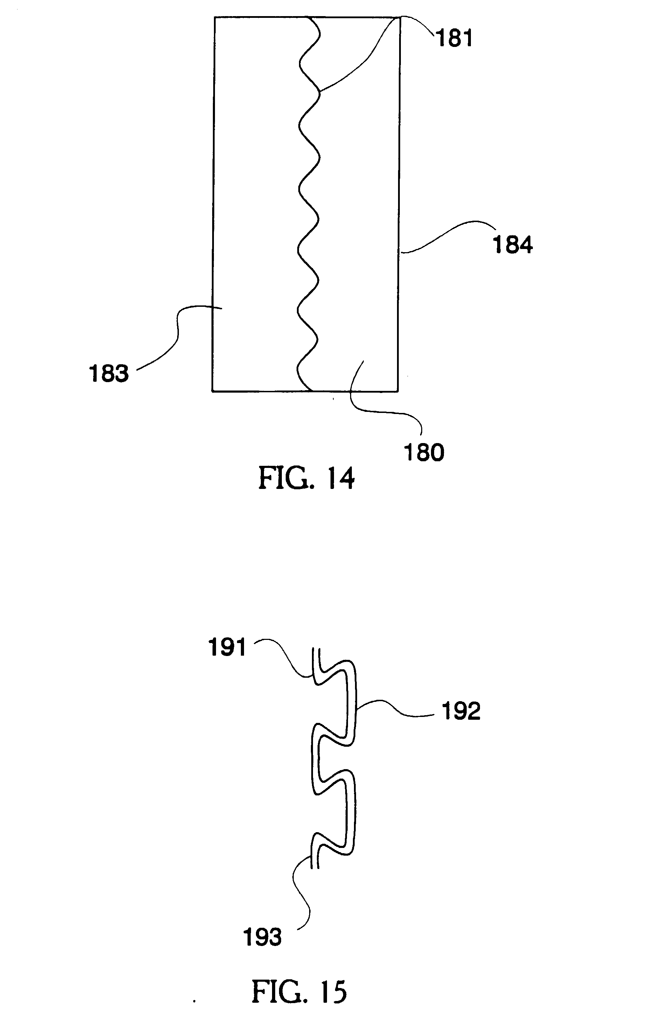

- Fig. 14: eine Längsansicht eines in zwei Hälften teilbaren Wickelkernes;
- Fig. 15: einen geänderter Nahtverlauf für einen teilbaren Wickelkern gemäß dem Ausführungsbeispiel gemäß Fig. 14; und

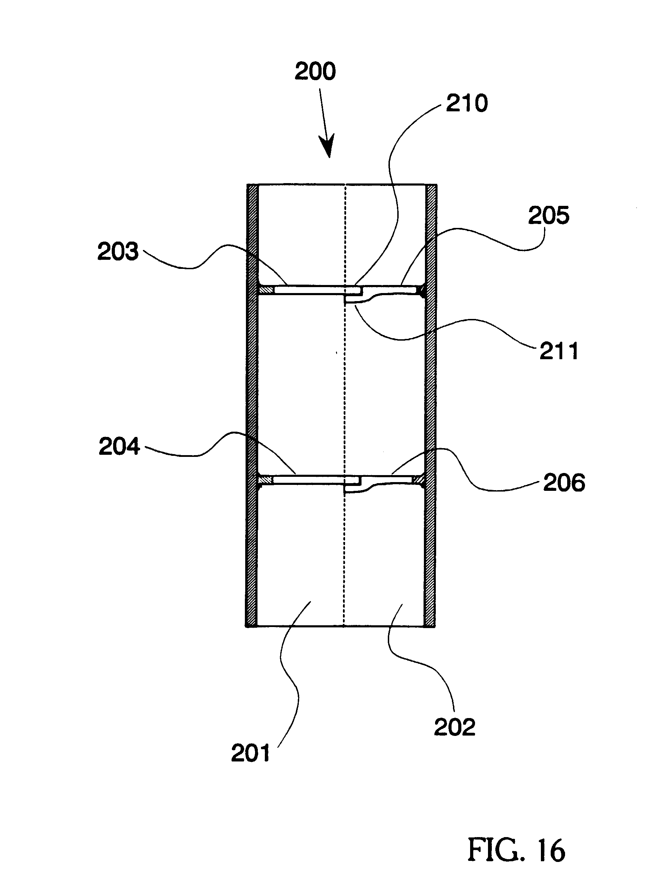

- Fig. 16: einen Längsschnitt durch ein weiteres Ausführungsbeispiel eines teilbaren Wickelkernes.

Ein erstes Ausführungsbeispiel der Wickelspule wird nun in bezug auf die Fig. 1 bis 10 beschrieben.

Die insgesamt mit 50 bezeichnete Wickelspule weist einen konischen Wickelkern 52 auf und einen lösbar mit dem Wickelkern 52 verbundenen ersten unteren Flansch 53, der am Ende des Wickelkerns angeordnet ist, welches den kleineren Durchmeser aufweist. Ein zweiter, oberer Flansch 54 ist am Ende des Wickelkerns mit größerem Durchmesser angeordnet und einstückig mit diesem ausgebildet. Die Spule ist insgesamt im wesentlichen rotationssymmetrisch zur Rotations- oder Längsachse 56 gestaltet.

Der Wickelkern 52 mit dem daran angeformten Flansch 54 und der abnehmbare Flansch 53 bestehen aus Kunststoff.

Der Flansch 54 besteht aus einem im wesentlichen kreisringförmigen Wandteil 55, das sich in einer Ebene erstreckt, welche senkrecht zur Rotationsachse 56 der Spule liegt. Das Wandteil 55 ist durch senkrecht dazu angeordnete Verstärkungsrippen 57 verstärkt.

Das Wandteil 55 ist weiterhin mit einem zylindrischen Kreisring 58 verbunden, dessen Durchmesser größer ist als der obere Enddurchmesser des Wickelkernes. Der Ring 58 ist einstückig mit einer Vielzahl von Verstärkungsrippen 58a ausgebildet.

Der obere Flansch 54 ist weiterhin mit einer Anzahl von Bohrungen 59 versehen, welche zum Anbringen von Hebezeugen bzw. zum Befestigen eines Ablaufringes dienen.

Am äußeren Umfang des Flansches ist eine nach oben gerichtete Abkantung 60 vorgesehen, die in sich verrundet ist. Dadurch ist es möglich, den oberen Flansch 54 ohne Ablaufring unmittelbar als Ablaufhilfe einzusetzen.

Benachbart zu dieser Abkantung 60 ist ein zweiter zylindrischer Ring 61 vorgesehen, der den Flansch 54 zusätzlich versteift und mit den Verstärkungsrippen 57 verbunden ist.

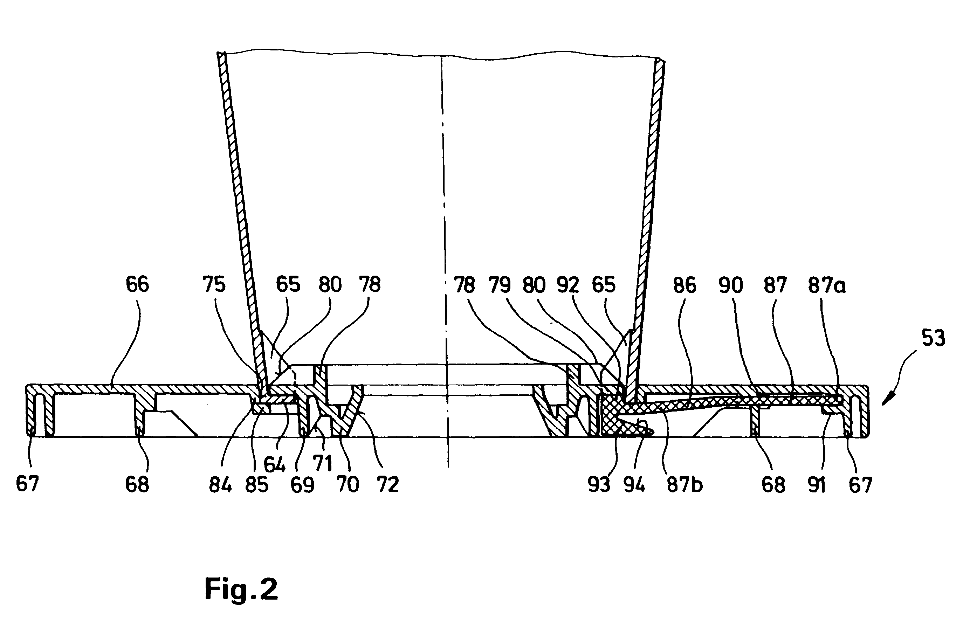

Am Ende des Wickelkerns mit dem kleineren Durchmesser sind, wie insbesondere aus der Fig. 5 zu ersehen ist, eine Vielzahl von nach innen ragenden Rastvorsprüngen 64 angeformt, wobei die Festigkeit der Rastvorsprünge 64 durch mit dem Innenbereich des Wickelkerns verbundene Radialstege 65 (siehe auch Fig. 2) erhöht ist.

Die Rastvorsprünge 64, beim Ausführungsbeispiel sind es acht Stück, sind im gleichen Abstand um den Innenumfang des Wickelkernes verteilt und sind so bemessen, daß der Abstand in Umfangsrichtung, bzw. die lichte Weite zwischen zwei benachbarten Rastvorsprüngen, etwas größer ist als die Länge der Rastvorsprünge selbst.

Beim Ausführungsbeispiel werden für eine typische Baugröße bei einem kleinsten Durchmesser des Wickelkernes von 178 mm die Vorsprünge in etwa so bemessen, daß sie 5 bis 12 mm vom unteren inneren Rand des Wickelkerns aus nach innen vorspringen.

Der erste, lösbare Flansch 53 weist eine, im montierten Zustand, dem Wickelgut zugewandte kreisringförmige Platte 66 auf, welche eine äußere, dem Wickelgut abgewandte, ringartige Verstärkung 67 aufweist, die in Form von zwei konzentrischen Ringen gestaltet ist, eine zweite mittlere Verstärkung 68 in Form eines Ringes sowie eine dritte, innenliegende ringförmige Verstärkung 69. Konzentrisch zur Rotationsachse des Flansches (die im montierten Zustand der Rotationsachse der Spule entspricht), ist benachbart zum inneren Verstärkungsring 69 ein Zentrierring 70 vorgesehen, der eine konische Ausnehmung 72 aufweist.

Eine Vielzahl von äquidistant angeordneten Verstärkungsrippen 74 ist auf der dem Wickelgut abgewandten Seite des Flansches angeordnet, um den Flansch weiter zu verstärken. In einem äußeren Bereich des Flansches, zwischen dem äußeren Verstärkungsring 67 und dem mittleren Verstärkungsring 68, ist die Zahl der Rippen doppelt so hoch, wie zwischen dem mittleren Verstärkungsring 68 und dem inneren Verstärkungsring 69, um eine höhere Steifigkeit des Flansches in diesem Bereich zu bewirken.

Der Durchmesser des Verstärkungsringes 68 ist geringfügig größer als der Durchmesser des Verstärkungsringes 58 des zweiten Flansches 54. Weiterhin weisen die Verstärkungsrippen 74 im Bereich des Verstärkungsringes 68 Einschnitte 74a (siehe Fig. 1) auf. Werden die bewickelten Spulen aufeinandergestapelt, wie dies in Fig. 7 gezeigt ist, greift der Verstärkungsring 58 des zweiten Flansches in diese Ausnehmungen 74a ein, wobei der obere Teil des Verstärkungsringes 58 in Anlage an den Verstärkungsring 68 kommt. Dadurch wird beim Stapeln die obere Spule exakt in bezug zur unteren Spule zentriert und ein Verrutschen der oberen Spule in bezug zur unteren Spule verhindert.

Auf der im montierten Zustand dem Wickelgut zugewandten Seite weist der Flansch 53 eine im wesentlichen kreisringförmige Ausnehmung 75 auf, in der eine Haltestruktur 76 angeordnet ist, die mit den Rastvorsprüngen 64 des Wickelkerns zusammenwirkt.

Die Haltestruktur 76 weist einen konzentrisch zur Rotationsachse angeordneten zylindrischen Ring 78 auf, von dem eine Anzahl von Haltevorsprüngen 79 radial nach außen vorspringen. An jedem der Haltevorsprünge ist eine sich in raidaler Richtung erstreckende Verstärkungsrippe 81 angeordnet, welche eine zusätzliche Verbindung zwischen den Haltevorsprüngen und dem Zylinderring 78 herstellen, und somit die Haltevorsprünge in axialer Richtung der Wickelspule versteifen.

Zwischen den Haltevorsprüngen 79 ist, wie durch den Doppelpfeil 83 angedeutet, in Umfangsrichtung ein Abstand vorgesehen, der etwas größer ist als die Abmessung der Rastvorsprünge 64 des Wickelkernes.

Die ringförmige Ausnehmung 75 wird, wie insbesondere aus der Fig. 2 zu entnehmen ist, durch einen ersten Wandabschnitt 84 gebildet, dessen vordere Wandfläche, die dem Wickelkern zugewandt ist, im gleichen Winkel zur Rotationsachse geneigt ist, wie die Wand des Wickelkernes 52. An diesen ersten Wandabschnitt 84 schließt sich ein zweiter Wandabschnitt 85 an, der senkrecht zur Rotationsachse angeordnet ist.

Die Verbindung zwischen Wickelkern und Flansch erfolgt, indem der Wickelkern so auf den Flansch aufgesetzt wird (vgl. auch Fig. 8), daß die Rastvorsprünge 64 im Bereich des Zwischenraumes 83 des Flansches liegen. Dadurch kann der Wickelkern so in den Flansch eingeführt werden, daß das untere Ende des Wickelkernes mit den Rastvorsprüngen 64 auf dem zweiten Wandabschnitt 85 aufliegt, wie dies in Fig. 2 dargestellt ist. Anschließend werden Wickelkern und Flansch relativ zueinander verdreht, bis die Stege 65 der Rastvorsprünge 64 an den Stegen 81 der Haltevorsprünge 79 anliegen. In dieser Position untergreift jeweils einer der Rastvorsprünge 64 einen zugeordneten Haltevorsprung 79, so daß eine axial gesicherte Verbindung zwischen Wickelkern und Flansch besteht.

Um die Verbindung auch radial zu sichern, ist zumindest ein Verriegelungselement vorgesehen, dessen Aufbau nun in bezug auf die Fig. 2, 3 und 4 beschrieben wird.

Das Verriegelungselement 86 besteht aus einem elastischen Material, wie Kunststoff oder Metall und weist eine längliche Platte 87 auf, die durch zwei Seitenstege 88 und 89 im Flansch geführt ist. Weiterhin ist im mittleren Verstärkungsring 68 eine Ausnehmung 90 vorgesehen, durch welche die Platte 87 geführt ist und der Verstärkungsring 67 ist mit einer radial nach innen ragenden Rippe 91 versehen, die eine Tasche bildet, in der das vom Wickelkern abgewandte Ende 87a der Platte des Verriegelungselementes 86 gehalten ist. In dieser Position ist die Platte 87 im wesentlichen parallel zu der dem Wickelgut zugewandten Fläche des Flansches 53 und wird in dieser Position gehalten.

An dem dem Wickelkern zugewandten Ende 87b der Platte ist, einstückig mit dieser, ein Steg 92 angeformt, dessen Breite etwas geringer ist als die Breite eines Zwischenraumes 83 zwischen zwei Haltevorsprüngen 79 des Flansches.

Auf der dem Steg 92 abgewandten Seite der Platte 87 ist eine keilartige Verdickung 93 angeformt, durch welche ein Keilspalt 94 gebildet ist.

Das vordere Ende 87b der Platte weist einen nur geringen Abstand zum inneren Verstärkungsring 69 des Flansches 53 auf, so daß das Verriegelungselement 86 durch die Rippe 91, die Ausnehmung 90 und die Rippe 69 unverlierbar am Flansch gehalten ist.

Nachfolgend wird nun die Funktion dieses Verriegelungselementes beschrieben.

Beim Einführen des Wickelkerns in die ringförmige Ausnehmung 75 des Flansches wird das Verriegelungselement (in der Darstellung gemäß Fig. 2) elastisch verformt und nach unten gedrückt. Sobald das untere Ende des Wickelkerns den zweiten Wandabschnitt 85 erreicht hat, wird der Wickelkern gedreht, wodurch die Rastvorsprünge 64 unterhalb der Vorsprünge 79 zu liegen kommen. In dieser Position wird der Zwischenraum zwischen den beiden benachbarten Haltevorsprüngen, zwischen denen das Verriegelungselement angeordnet ist, frei und das Verriegelungselement bewegt sich infolge der elastischen Rückstellkraft wieder nach oben. Dadurch wird der Zwischenraum zwischen diesen Haltevorsprüngen geschlossen und der Wickelkern und der Flansch an einer Relativbewegung in radialer Richtung zueinander gehindert. Der Flansch ist dann in diesem Zustand sowohl axial als auch radial in bezug auf den Wickelkern gesichert.

Die keilartige Vertiefung 93 hat eine doppelte Funktion.

Wie vorstehend ausgeführt, wird die erfindungsgemäße Wickelspule vorzugsweise in einer Wickelvorrichtung gewickelt, welche die Flansche der Wickelspule in axialer Richtung abstützt. Dazu wird vorzugsweise eine Wickelvorrichtung verwendet, bei welcher die Wickelspule mit vertikaler Orientierung der Rotationsachse aufgenommen ist, und die eine untere Stützplatte mit einer Zentriereinrichtung und eine obere Stützplatte mit einer Zentriereinrichtung aufweist. Da die keilförmige Verdickung mit ihrem (in der Darstellung gemäß Fig. 2) unteren Ende exakt mit den unteren Enden der Verstärkungsrippen 67, 68 und 69 übereinstimmt, liegt diese keilförmige Verdickung ebenfalls auf einer derartigen Stützplatte auf. Dadurch wird das Verriegelungselement an einer Bewegung in axialer Richtung zum Wickelkern gehindert, so daß eine Deformation des Verriegelungselementes und damit ein Freigeben der radialen Sicherung ausgeschlossen ist.

Zur Demontage des Wickelkerns kann, wie in Fig. 9 dargestellt ist, ein geeignetes Werkzeug, z.B. ein Schraubenzieher verwendet werden, der in den Keilspalt 94 eingeführt wird. Der Keilspalt 94 und damit das vordere Ende 87b der Platte 87 werden dadurch (in der Darstellung gemäß Fig. 2) nach unten gedrückt, wodurch der Steg 92 den Zwischenraum zwischen den benachbarten Haltevorsprüngen freigibt, und Flansch und Wickelkern gegeneinander verdreht werden können. Der Wickelkern kann dann ohne weitere manuelle Tätigkeiten vom Flansch abgenommen werden.

In einer besonders bevorzugten Ausführung kann der Keilspalt so gestaltet werden, daß, im Unterschied zur Darstellung gemäß Fig. 9, die Verriegelung auch von Hand gelöst werden kann. Die Bedienungskraft greift dann dazu mit dem Finger in den Keilspalt ein und hebt die Verriegelungselemente an. Gleichzeitig wird der Flansch in die Öffnungsrichtung gedreht und kann dann vom Wickelkern abgenommen werden. Auf diese Art und Weise ist es möglich, praktisch mit einer einzigen Bewegung den Flansch zu entriegeln und vom Wickelkern abzunehmen. Dadurch wird die Zeit, die zur Demontage des Flansches benötigt wird, auf ein Minimum verkürzt, ohne daß dadurch die Festigkeit der Verbindung Flansch - Wickelkern beeinträchtigt wird.

Nach dem Trennen des lösbaren Flansches 53 vom Wickelkern 52 können die Wickelkerne platzsparend gestapelt werden, indem die Kerne ineinander geschoben werden.

Wie in Fig. 6 gezeigt ist, können auch die lösbaren Flansche 53 der Spule 50 platzsparend aufeinandergestapelt werden.

Beim Aufeinanderstapeln der Flansche greift (vgl. Fig. 2 und Fig. 6) der Ring 78 in den Zwischenraum 71 zwischen dem Ring 69 und dem Ring 70 des Flansches 53 ein. Dazu weist der Ring 69 eine Reihe von Einkerbungen, die in Fig. 2 und 3 angedeutet sind, auf, in die die Stege 81 beim Aufeinanderstapeln eingreifen.

Durch das Zusammenwirken von Ring 78, Ring 69 und Ring 70 werden die Flansche radial zueinander gesichert, so daß sie sich im gestapelten Zustand nicht gegeneinander verschieben können. Die Stege 81 und die zugeordneten Einkerbungen bewirken darüber hinaus noch eine Verdrehsicherung der Flansche im gestapelten Zustand.

Die Vorteile der Gestaltung der erfindungsgemäßen Spule für den Transport sollen an einem Beispiel erläutert werden: Um 100 nicht zerlegbare Spulen üblicher Abmessung mit einem Durchmesser von 400 mm zu transportieren, werden 17 Paletten benötigt, da jeweils nur 6 Spulen auf eine Palette passen. Die insgesamt erforderliche Ladefläche ist 16,32 m², was bei einer Ladehöhe von 610 mm ein Ladevolumen von 9,95 m³ bedeutet.

Werden dagegen 100 zerlegte Spulen gemäß der Erfindung transportiert, so können auf einer Platte vier Stapel mit je 25 Wickelkernen und zwei Stapel mit jeweils 50 abnehmbaren Flanschen angeordnet werden. Die gesamte Ladefläche entspricht also der Fläche einer Palette von 0,96 m², was bei einer Ladehöhe von 1275 mm ein Ladevolumen von 1,224 m³ bedeutet.

Die Verwendung der erfindungsgemäßen Spulen bedeutet also eine Verminderung der Ladefläche auf 1/17 und eine Verminderung des Ladevolumens von 1/8. Zudem wird auch das Be- und Entladen wesentlich vereinfacht, da zum Laden dieser 100 Spulen nur noch eine einzelne Palette bewegt werden muß.

Durch die erfindungsgemäße Gestaltung der Spule wird eine Spule geschaffen, die einerseits eine hohe Festigkeit aufweist, die aber andererseits auf einfache Weise und kostengünstig zu transportieren ist. Zum Zusammenfügen bzw. Trennen der Spule sind jeweils nur wenige Sekunden erforderlich.

Das in bezug auf die Fig. 1 beschriebene Ausführungsbeispiel ist besonders vorteilhaft, um mit einem Wickelverfahren bewickelt zu werden, wie es in der EP-B-0 334 211 beschrieben ist, auf deren Offenbarung hiermit Bezug genommen werden. Bei diesem Wickelverfahren entsteht, wie die Wicklung 100 in Fig. 10 zeigt, Wickellagen, deren Winkel gegen den Kegelwinkel des konischen Wickelkernes 52 geneigt ist.

Dadurch entsteht, im Zusammenhang mit der erfindungsgemäßen Spule, ein Gebinde, welches besonders hohe Stabilität aufweist, so daß zusätzliche Sicherungsmaßnahmen, insbesondere eine Kunststoffumhüllung der Wickelspule entfallen kann.

Fig. 10 zeigt, wie die Wickelspule unmittelbar auch zum Abzug eingesetzt werden kann.

Dazu wird die Spule, wie aus Fig. 10 ersichtlich, derart senkrecht aufgestellt, daß der abnehmbare Flansch 53 unten ist. Dies entspricht auch der Orientierung beim Aufwickeln. Ein metallischer Ablaufring 105, der eine gewölbte metallische Oberfläche 106 aufweist, wird auf den oberen Flansch 54 auf- bzw. teilweise in den Kunststoffhohlraum des Wickelkerns 52 eingelegt, und mit Bolzen 107 in den Bohrungen 59 des Wickelkerns gesichert. Der Draht 38 wird über den Ablaufring 35 und durch eine Öse 109 geführt. Auf diese Art und Weise kann der Draht von der Spule abgezogen werden, ohne daß weitere Hilfsmittel erforderlich wären. Es ist aber auch möglich, den Draht ohne Hilfsmittel, d.h. also ohne zusätzlichen Ablaufring unmittelbar von der Spule selbst abzuziehen.

Ein weiteres Ausführungsbeispiel der Erfindung wird nun in bezug auf die Fig. 11 beschrieben.

Bei diesem Ausführungsbeispiel ist eine Wickelspule 150 vorgesehen, welche einen zylindrischen Kern 152 aufweist. Die Spule hat (in der Darstellung gemäß Fig. 11) einen unteren Flansch 153 und einen oberen Flansch 154. Der untere Flansch 153 entspricht in seinem Aufbau vollständig dem Flansch 53 des zuvor beschriebenen Ausführungsbeispiels mit dem Unterschied, daß der Flansch dafür vorgesehen ist, einen zylindrischen Wickelkern aufzunehmen. Es werden deshalb die gleichen Bezugszeichen verwendet und auf eine weitere Beschreibung der Einzelheiten des Flansches und des Verriegelungselementes verzichtet.

Der Flansch 154 ist identisch zum Flansch 153 gestaltet, so daß auch diesbezüglich auf die Ausführungen zum ersten Ausführungsbeispiel verwiesen werden kann.

Bei diesem zweiten Ausführungsbeispiel können die Flansche somit in der gleichen Weise platzsparend gestapelt werden, wie dies in Fig. 6 dargestellt ist. Die zylindrischen Wickelkerne 152 können in gleicher Weise wie Röhren aufeinandergestapelt werden.

Die Spule 150 ist, wie die Spule 50 ebenfalls aus Kunststoff gestaltet.

Die Spule 150 hat den Vorteil, daß sie erheblich leichter ist als eine entsprechende Spule aus Stahl. Darüber hinaus kann das Transportvolumen durch das Stapeln der Flansche und der Wickelkerne erheblich vermindert werden.

Diese Spule mit zylindrischem Wickelkern ist insbesondere dann vorteilhaft anzuwenden, wenn der Anwender der Spulen nicht über eine Wickelvorrichtung verfügt, die derart gesteuert werden kann, daß die Bewicklung eines konischen Wickelkernes möglich ist. Da die einzelnen Windungen beim konischen Wickelkern unterschiedliche Durchmesser aufweisen, muß die Verlegeeinrichtung in entsprechender Weise, beispielsweise durch eine elektronische Steuereinrichtung, gesteuert werden. Bei Wickelvorrichtungen, die über derartige Steuereinrichtungen nicht verfügen, ist somit die Verwendung einer zylindrischen Spule vorteilhaft, um die Ziele der Erfindung zu verwirklichen.

Gemäß einer in Fig. 12 dargestellten Abwandlung des Ausführungsbeispiels gemäß Fig. 11 ist der Wickelkern in Längsrichtung, d.h. parallel zur Rotationsachse 156, teilbar. Die Teilung kann in zwei gleiche Hälften erfolgen, es ist jedoch auch möglich, eine Teilung in drei oder mehr Stücke vorzusehen. Die Längsteilung des Wickelkernes hat den Vorteil, daß die Wickelkerne beim Transport dann weitaus weniger Platz einnehmen als im nicht geteilten Zustand.

Die Teilung des Wickelkernes kann so erfolgen, daß die eine Hälfte des Wickelkernes 160 in einen entsprechend gestalteten Absatz 162 der zweiten Wickelkernhälfte 161 eingreift. Da jede Wickelkernhälfte im Spulenflansch festgehalten ist und durch jeweils ein Verriegelungselement an einer Drehbewegung relativ zum Spulenflansch gehindert ist, wird dadurch bereits ein ausreichender Halt der beiden Wickelkernhälften erreicht.

Der Vorteil dieser Gestaltung ist, daß die beiden Wickelkernhälften insgesamt identisch aufgebaut sein können und einfach ineinandergeschoben werden.

Fig. 13 zeigt eine Abwandlung dieses Ausführungsbeispiels, wobei hier in der einen Wickelkernhälfte 170 an dessen der Rotationsachse 156 zugewandten inneren Seite eine Längsnut 171 eingelassen ist, die parallel zur Rotationsachse 156 verläuft. Die zweite Wickelkernhälfte 172 weist einen Absatz 173 auf, wie beim Ausführungsbeispiel gemäß Fig. 12, der hier jedoch mit einem durchgehenden Vorsprung 174 versehen ist, der ebenfalls parallel zur Rotationsachse 156 verläuft. Auch hier können die Wickelkernhälften auf einfache Weise ineinandereingeschoben werden, wobei das Zusammenwirken von Nut 171 und Vorsprung 174 eine zusätzliche Sicherung in radialer Richtung bedeutet.

Statt einer durchlaufenden Nut und eines durchlaufenden Vorsprunges, wie dies in Fig. 13 dargestellt ist, können auch einzelne Vertiefungen an der Innenseite des Wickelkernes 170 vorgesehen sein, in die entsprechend ausgestaltete Vorsprünge des zweiten Wickelkernes eingreifen.

Fig. 14 zeigt ein weiteres Ausführungsbeispiel eines teilbaren Wickelkernes 180, welcher in Verbindung mit dem zweiten Ausführungsbeispiel gemäß Fig. 11 zu benutzen ist. Bei diesem Ausführungsbeispiel ist der Wickelkern ebenfalls in zwei Hälften parallel zur Rotationsachse 156 geteilt. Die Teilfuge ist hier jedoch nicht linear, wie beim Ausführungsbeispiel gemäß Fig. 12 und Fig. 13, sondern es sind einzelne Vorsprünge und Einschnitte in beide Hälften des Wickelkernes gebildet, die so gestaltet sind, daß sie beim Zusammenfügen der beiden Hälften ineinander eingreifen.

Bei einer entsprechenden Gestaltung der Trennfuge, insbesondere durch eine entsprechende Abschrägung der Kanten, kann erreicht werden, daß die beiden Hälften unmittelbar ineinander einschnappen.

Statt einer schlangenlinienförmigen Trennfuge, wie dies in Fig. 14 gezeigt ist, kann auch eine schwalbenschwanzförmige Trennfuge 193 verwendet, um eine erste Wickelkernhälfte 191 und eine zweite Wickelkernhälfte 192 miteinander zu verbinden, wobei auch hier die schwalbenschwanzförmige Trennlinie parallel zur Rotationsachse 156 verläuft.

Ein weiteres Ausführungsbeispiel eines geteilten zylindrischen Wickelkernes wird nun in bezug auf die Fig. 16 beschrieben.

Bei diesem Ausführungsbeispiel ist der Wickelkern 200 entlang seiner Rotationsachse, d.h. in Längsrichtung, in zwei identische Hälften 201 und 202 geteilt. In beiden Hälften sind zwei radial verlaufende Verstärkungsrippen 203, 204 in der Hälfte 201, sowie 205, 206 in der Hälfte 202 vorgesehen, welche im zusammengebauten Zustand des Wickelkernes eine kreisringförmige Gestalt aufweisen.

Auf jeder Seite einer Wickelkernhälfte ist die Rippe um einen Bereich 210 in bezug auf die andere Hälfte verlängert, und die entsprechend zugeordnete Rippe der anderen Wickelkernhälfte weist einen Absatz 211 auf, in den die Verlängerung 210 eingreift.

Zwischen der Verlängerung 210 und dem Absatz 211 sind vorzugsweise (nicht dargestellte) Verriegelungsmittel, beispielsweise Rastvorsprünge od.dgl. angeordnet, die die beiden Hälften zusammenhalten.

Dieses Ausführungsbeispiel hat den Vorteil, daß die kreisringförmigen Verstärkungsrippen 203, 204 den Kern in radialer Richtung versteifen, so daß der Wickelkern auch bei dünnerer Wanddicke und somit geringerem Gewicht dem in radialer Richtung wirkenden Wickeldruck beim Aufwickeln standhalten kann. Durch die Verriegelung der Verstärkungsrippen wird zudem ein verbesserter Zusammenhalt der beiden Wickelkernhälften erreicht.

Statt der gezeigten zwei Verstärkungsrippen kann auch eine, symmetrisch in der Mitte angeordnete umlaufende Verstärkungsrippe vorgesehen werden, bei höheren Beanspruchungen können auch drei oder mehr entsprechende Rippen vorgesehen werden.

Die in bezug auf die Fig. 12 bis 16 beschriebenen Ausführungsbeispiele können auch entsprechend verwendet werden, wenn der Wickelkern in drei oder mehr Teile geteilt wird.

Bei den vorstehend beschriebenen Ausführungsbeispielen wurde eine Wickelspule mit konischem Kern beschrieben, welche einen lösbaren und einen festen Flansch aufweist. Dieses Ausführungsbeispiel kann auch so abgewandelt werden, daß die Spule mit konischem Wickelkern ebenfalls zwei lösbare Flansche aufweist. Weiterhin kann der konische Wickelkern ebenfalls in Ebenen parallel zu seiner Rotationsachse längsgeteilt sein, wobei eine Teilung in zwei Hälften oder in mehr Teile möglich ist.

Beim Ausführungsbeispiel mit zylindrischem Wickelkern kann der zweite Flansch fest mit dem Wickelkern verbunden sein, er kann insbesondere auch an den zylindrischen Wickelkern angeformt sein, wie dies beim festen Flansch in bezug auf die Wickelspule mit konischem Wickelkern beschrieben wurde.

## Patentansprüche

1. Wickelspule zur Aufnahme von langgestrecktem Wickelgut und besonders von Wickelgut, welches Metall enthält, wie Draht, Litze, mit Kunststoff umhüllte Litze usw., mit
einem Wickelkern, welcher im wesentlichen rotationssymmetrisch zu einer Rotationsachse gestaltet ist und welcher ein erstes Ende aufweist, an dem eine kreisringförmige Platte (53) angeordnet ist,
ein zweites, dem ersten gegenüberliegendes und mit einem Flansch (55) versehenes Ende,
Verbindungsmitteln, welche zumindest zwischen dem ersten Ende des Wickelkerns und dieser kreisringförmigen Platte vorgesehen sind, um die kreisringförmige Platte und den Wickelkern lösbar miteinander zu verbinden,
wobei am ersten Ende des Wickelkernes (52) voneinander beabstandete, nach innen ragende Rastvorsprünge (64) vorgesehen sind, welche im montierten Zustand mit entsprechend gestalteten Haltevorsprüngen (79) an der kreisringförmigen Platte (53) zusammenwirken, so daß die kreisringförmige Platte und der Wickelkern in Axialrichtung, d.h. in Längsrichtung der Rotationsachse (56), der Wickelspule (50) relativ zueinander gehalten sind,
dadurch gekennzeichnet,
daß diese kreisförmige Platte als erster Flansch (53) ausgebildet ist, welcher zum Transport der Leerspule abnehmbar ist,
daß ein aus Kunststoff oder Metall bestehendes Verriegelungselement (86) vorgesehen ist, das im abnehmbaren Flansch geführt ist und welches im montierten Zustand des abnehmbaren Flansches zwischen diese vorsprünge eingreift und eine Relativbewegung zwischen Wickelkern und abnehmbarem Flansch verhindert, so daß der abnehmbare Flansch axial und radial in bezug auf den Wickelkern gesichert ist.

2. Wickelspule gemäß Anspruch 1, dadurch gekennzeichnet, daß der zweite Flansch fest mit diesem zweiten Ende des Wickelkerns verbunden ist.

3. Wickelspule gemäß Anspruch 1, dadurch gekennzeichnet, daß die Verbindungsmittel auch zwischen dem zweiten Ende des Wickelkerns und dem zweiten Flansch angeordnet sind, so daß auch der weite Flansch lösbar mit dem Wickelkern verbunden ist.

4. Wickelspule gemäß Anspruch 1 bis 3, dadurch gekennzeichnet, daß die Haltevorsprünge (79) einen Abstand in Umfangsrichtung des abnehmbaren Flansches (53) gesehen zueinander aufweisen, der größer ist als die Länge dieser Rastvorsprünge (64) und daß Haltevorsprünge (79) und Rastvorsprünge (64) derart ineinander in Eingriff gebracht werten, daß der Wickelkern (52) mit den Rastvorsprüngen zunächst zwischen diese Haltevorsprünge gesetzt und daß dann Flansch und Wickelkern um einen vorbestimmten Winkel gegeneinander verdreht werden, so daß diese Haltevorsprünge und diese Rastvorsprünge in Eingrfff miteinander kommen.

5. Wickelspule gemäß Anspruch 4, dadurch gekennzeichnet, daß an jedem abnehmbaren Flansch zumindest ein Verriegelungselement (86) vorgesehen ist, welches in den Zwischenraum zwischen diesen Haltevorsprüngen (79) eingreift und eine Relativbewegung von Wickelkern (52) und abnehmbarem Flansch (53) blockiert, wenn die Haltevorsprünge (79) und die Rastvorsprünge (64) miteinander in Eingriff sind.

6. Wickelspule gemäß Anspruch 5, dadurch gekennzeichnet, daß dieses Verriegelungselement (86) als elastisch verformbares Element ausgebildet ist, welches im abnehmbaren Flansch gehalten ist, und welches beim Zusammenfügen von Wickelkern (52) und Flansch (53) bzw. von außen her mittels eines Werkzeuges oder von Hand derartig elastisch verformbar ist, daß es im verformten Zu stand den Zwischenraum zwischen diesen Haltevorsprüngen freigibt, so daß eine Drehbewegung zwischen dem Wickelkern und diesem abnehmbaren Flansch möglich ist, und daß es nach dieser Verformung in seine Ausgangsposition zurückkehrt, in welcher eine Drehbewegung zwischen Wickelkern und abnehmbaren Flansch verhindert wird.

7. Wickelspule gemäß einem der Ansprüche 1 bis 6, dadurch gekennzeichnet, daß das Verriegelungselement eine Verdickung (93) aufweist, welche so gestaltet ist, daß das Verriegelungselement nicht in eine Position, in der die Verdrehung des Wickelkerns freigegeben ist, gelangt, wenn die Wickelspule (50) mit dem abnehmbaren Flansch (53) auf einer ebenen Fläche bzw. auf einer entsprechend gestalteten Fläche aufsteht.

8. Wickelspule gemäß mindestens einem der Ansprüche 1 bis 5, dadurch gekennzeichnet, daß jeder abnehmbare Flansch (3;53) eine im wesentlichen kreisscheibenförmige, dem Wickelkern zugewandte Flanschfläche (26;66) aufeist und daß, an der dem Wickelkern abgewandten Seite dieses scheibenartigen Teiles in Umfangsrichtung und in radialer Richtung verlaufende Verstärkungsrippen vorgesehen sind.

9. Wickelspule gemäß Anspruch 2, dadurch gekennzeichnet, daß am festen Flansch in Umfangsrichtung und in radialer Richtung verlaufende Verstärkungsrippen vorgesehen sind.

10. Wickelspule gemäß Anspruch 8 oder 9, dadurch gekennzeichnet, daß die Verstärkungsrippen an jedem Flansch so gestaltet sind, daß beim Übereinanderstapeln mehrerer montierter und ggfs. gefüllter Spulen die Verstärkungsrippen vom ersten und zweiten Flansch so ineinander eingreifen, daß eine formschlüssige Verbindung geschaffen ist, die ein Verrutschen der Flansche relativ zueinander, verhindert.

11. Wickelspule gemäß mindestens einem der Ansprüche 1 bis 10, dadurch gekennzeichnet, daß der Wickelkern zylindrisch gestaltet ist.

12. Wickelspule gemäß mindestens einem der Ansprüche 1 bis 10, dadurch gekennzeichnet, daß der Wickelkern konisch gestaltet ist.

13. Wickelspule gemäß Anspruch 11 oder 12, dadurch gekennzeichnet, daß der Wickelkern in einer Ebene, welche die rotationsachse des Wickelkernes umfaßt, teilbar ist.

14. Wickelspule gemäß Anspruch 13, dadurch gekennzeichnet, daß im Inneren des Wickelkernes nach innen ragende, in Längsrichtung oder in Umfangsrichtung verlaufende Verstärkungsrippen vorgesehen sind.

15. Wickelspule gemäß mindestens einem der Ansprüche 13 oder 14, dadurch gekennzeichnet, daß Rastmittel vorgesehen sind, welche ein Verrasten der einzelnen Teile des Wikkelkerns miteinander bewirken.

16. Wickelspule gemäß mindestens einem der Ansprüche 1 bis 15, dadurch gekennzeichnet, daß der Wickelkern (2; 52) und jeder Flansch aus Kunststoff besteht.

17. Wickelspule gemäß mindestens einem der Ansprüche 1 bis 16, dadurch gekennzeichnet, daß dieses Verriegelungselement (86) eine längliche Platte (87) aufweist.

18. Wickelspule gemäß Anspruch 17, dadurch gekennzeichnet, daß diese Platte im Flansch in einer Position gehalten ist, die im wesentlichen parallel zu der dem Wickelgut zugewandten Fläche des abnehmbaren Flansches (53) ist.

19. Wickelspule gemäß mindestens einem der Ansprüche 1 bis 18, dadurch gekennzeichnet, daß in dem abnehmbaren Flansch (53) eine im wesentlichen kreisringförmige Ausnehmung (75) vorgesehen ist, in der eine Haltestruktur mit diesen Haltevorsprüngen (79) angeordnet ist.

## Claims

1. Winding bobbin for receiving elongated winding material and in particular winding material which contains metal, such as wire, stranded wire, stranded wire covered with synthetic material etc., with a winding core, which is designed to be essentially rotationally symmetrical with respect to an axis of rotation and which comprises a first end, on which an annular plate (53) is located, a second end located opposite the first end and provided with a flange (55), connecting means, which are provided at least between the first end of the winding core and this annular plate, in order to connect the annular plate and the winding core detachably to each other, in which case provided at the first end of the winding core (52) are locking projections (64) spaced apart and projecting inwards, which in the assembled state cooperate with correspondingly shaped retaining projections (79) on the annular plate (53), so that the annular plate and the winding core are held relative to each other in the axial direction, i.e. in the longitudinal direction of the axis of rotation (56) of the winding bobbin (50), characterised in that this annular plate is constructed as a first flange (53), which can be removed for the transportation of the empty bobbin, that a locking member (86) consisting of synthetic material or metal is provided, which is guided in the removable flange and which in the assembled state of the removable flange engages between these projections and prevents a relative movement between the winding core and removable flange, so that the removable flange is secured axially and radially with respect to the winding core.

2. Winding bobbin according to Claim 1, characterised in that the second flange is securely connected to this second end of the winding core.

3. Winding bobbin according to Claim 1, characterised in that the connecting means are also located between the second end of the winding core and the second flange, so that the second flange is also detachably connected to the winding core.

4. Winding bobbin according to Claims 1 to 3, characterised in that, seen in the peripheral direction of the removable flange (53), the retaining projections (79) have a spacing from each other which is greater than the length of these locking projections (64) and that retaining projections (79) and locking projections (64) are brought into engagement with each other so that the winding core (52) with the locking projections is first of all placed between these retaining projections and that then the flange and winding core are rotated through a predetermined angle with respect to each other, so that these retaining projections and these locking projections come into engagement with each other.

5. Winding bobbin according to Claim 4, characterised in that provided on each removable flange is at least one locking member (86), which engages in the gap between these retaining projections (79) and prevents a relative movement of the winding core (52) and removable flange (53), when the retaining projections (79) and the locking projections (64) are in engagement with each other.

6. Winding bobbin according to Claim 5, characterised in that this locking member (86) is constructed as an elastically deformable member, which is held in the removable flange and which at the time of fitting-together of the winding core (52) and flange (53) is elastically deformable from outside by means of a tool or by hand so that in the deformed state it releases the gap between these retaining projections, so that a rotary movement between the winding core and this removable flange is possible and that after this deformation it returns to its initial position, in which a rotary movement between the winding core and removable flange is prevented.

7. Winding bobbin according to one of Claims 1 to 6, characterised in that the locking member comprises a thickened portion (93), which is designed so that the locking member does not come into a position in which the rotation of the winding core is released, when the winding bobbin (50) with the removable flange (53) stands on a flat surface or a correspondingly shaped surface.

8. Winding bobbin according to at least one of Claims 1 to 5, characterised in that each removable flange (3; 53) comprises a flange surface (26; 66) essentially in the shape of a circular disc and facing the winding core and that, strengthening ribs extending in the peripheral direction and in the radial direction are provided on the side of this disc-shaped part remote from the winding core.

9. Winding bobbin according to Claim 2, characterised in that strengthening ribs extending in the peripheral direction and in the radial direction are provided on the fixed flange.

10. Winding bobbin according to Claim 8 or 9, characterised in that the strengthening ribs on each flange are designed so that when several mounted and possibly filled bobbins are stacked one above the other, the strengthening ribs of the first and second flange engage one in the other so that a form-locking connection is created, which prevents slipping of the flanges relative to each other.

11. Winding bobbin according to at least one of Claims 1 to 10, characterised in that the winding core has a cylindrical construction.

12. Winding bobbin according to at least one of Claims 1 to 10, characterised in that the winding core has a conical construction.

13. Winding bobbin according to Claim 11 or 12, characterised in that the winding core can be divided in a plane which includes the axis of rotation of the winding core.

14. Winding bobbin according to Claim 13, characterised in that provided inside the winding core are inwardly projecting strengthening ribs extending in the longitudinal direction or in the peripheral direction.

15. Winding bobbin according to at least one of Claims 13 or 14, characterised in that locking means are provided, which cause locking of the individual parts of the winding core one with the other.

16. Winding bobbin according to at least one of Claims 1 to 15, characterised in that the winding core (2; 52) and each flange consists of synthetic material.

17. Winding bobbin according to at least one of Claims 1 to 16, characterised in that this locking member (86) comprises an elongated plate (87).

18. Winding bobbin according to Claim 17, characterised in that this plate is held in the flange in a position which is essentially parallel to the surface of the removable flange (53) facing the winding material.

19. Winding bobbin according to at least one Claims 1 to 18, characterised in that provided in the removable flange (53) is an essentially annular recess (75), in which a retaining structure with these retaining projections (79) is located.

## Revendications

1. Bobine d'enroulement pour recevoir de la matière allongée à embobiner et notamment de la matière à embobiner qui contient du métal, comme du fil métallique, du fil toronné, du fil toronné enrobé de matière plastique, etc. comportant
- un noyau d'enroulement réalisé sensiblement à symétrie de révolution par rapport à un axe de rotation et comprenant une première extrémité sur laquelle est agencée une plaque annulaire (53),
- une seconde extrémité agencée en vis-à-vis de la première extrémité et pourvue d'une bride (55),
- des moyens de liaison qui sont prévus au moins entre la première extrémité du noyau d'enroulement et cette plaque annulaire, pour relier de façon détachable la plaque annulaire et le noyau d'enroulement l'un à l'autre,
dans laquelle des saillies d'enclenchement (64) écartées les unes des autres et dépassant vers l'intérieur sont prévues à la première extrémité du noyau d'enroulement (52), qui coopèrent dans l'état monté avec des saillies de maintien (79) réalisées en correspondance sur la plaque annulaire (53), de sorte que la plaque annulaire et le noyau d'enroulement sont maintenus l'un par rapport à l'autre en direction axiale de la bobine d'enroulement (50), c'est-à-dire en direction longitudinale de l'axe de rotation (56),
caractérisée en ce que
- cette plaque annulaire est réalisée comme une première bride (53) qui est amovible pour le transport de la bobine vide, et
- il est prévu un élément de verrouillage (86) constitué en matière plastique ou en métal qui est guidé dans la bride amovible et qui s'engage, dans l'état monté de la bride amovible, entre ces saillies et qui empêche un mouvement relatif entre le noyau d'enroulement et la bride amovible, de sorte que la bride amovible est bloquée axialement et radialement par rapport au noyau d'enroulement.

2. Bobine d'enroulement selon la revendication 1, caractérisée en ce que la seconde bride est fermement reliée à cette seconde extrémité du noyau d'enroulement.

3. Bobine d'enroulement selon la revendication 1, caractérisée en ce que les moyens de liaison sont également agencés entre la seconde extrémité du noyau d'enroulement et la seconde bride, de sorte que la seconde bride est également reliée de façon détachable au noyau d'enroulement.

4. Bobine d'enroulement selon l'une quelconque des revendications 1 à 3, caractérisée en ce que les saillies de maintien (79) présentent une distance les unes des autres vues en direction périphérique de la bride amovible (53), qui est plus grande que la longueur de ces saillies d'enclenchement (64), et en ce que les saillies de maintien (79) et les saillies d'enclenchement (64) sont amenées en engagement mutuel, de telle sorte que le noyau d'enroulement (52) comportant les saillies d'enclenchement est posé tout d'abord entre ces saillies de maintien et que la bride et le noyau d'enroulement sont alors tournés l'un par rapport à l'autre d'un angle prédéterminé, de sorte que ces saillies de maintien et ces saillies d'enclenchement viennent en engagement les unes avec les autres.

5. Bobine d'enroulement selon la revendication 4, caractérisée en ce qu'il est prévu sur chaque bride amovible au moins un élément de verrouillage (86) qui s'engage dans l'intervalle entre ces saillies de maintien (79) et qui bloque un mouvement relatif du noyau d'enroulement (52) et de la bride amovible (53) lorsque les saillies de maintien (79) et les saillies d'enclenchement (64) sont en engagement les unes avec les autres.

6. Bobine d'enroulement selon la revendication 5, caractérisée en ce que cet élément de verrouillage (86) est réalisé sous forme d'un élément élastiquement déformable qui est maintenu dans la bride amovible et qui est également déformable lors de l'assemblage du noyau d'enroulement (52) et de la bride (53), ou bien depuis l'extérieur au moyen d'un outil ou à la main, de telle sorte qu'il libère dans l'état déformé l'intervalle entre ces saillies de maintien de manière à permettre un mouvement de rotation entre le noyau d'enroulement et cette bride amovible, et en ce qu'après cette déformation, il retourne jusque dans sa position de départ dans laquelle un mouvement de rotation entre le noyau d'enroulement et la bride amovible est empêché.

7. Bobine d'enroulement selon l'une quelconque des revendications 1 à6, caractérisée en ce que l'élément de verrouillage présente un épaississement (93) qui est réalisé de telle sorte que l'élément de verrouillage ne parvient pas dans une position dans laquelle la rotation du noyau d'enroulement est libérée, lorsque la bobine d'enroulement (50) avec la bride amovible (53) est dressée sur une surface plane ou sur une surface réalisée en correspondance.

8. Bobine d'enroulement selon l'une quelconque au moins des revendications 1 à 5, caractérisée en ce que chaque bride amovible (3 ; 53) comprend une surface (26 ; 66) sensiblement en forme de disque circulaire et orientée vers le noyau d'enroulement, et en ce qu'il est prévu sur le côté de cette pièce en forme de disque, détourné du noyau d'enroulement, des nervures de renforcement qui s'étendent en direction périphérique et en direction radiale.

9. Bobine d'enroulement selon la revendication 2, caractérisée en ce qu'il est prévu sur la bride fixe des nervures de renforcement qui s'étendent en direction périphérique et en direction radiale.

10. Bobine d'enroulement selon l'une ou l'autre des revendications 8 et 9, caractérisée en ce que les nervures de renforcement sur chaque bride sont réalisées de telle sorte que lors de l'empilement les unes au-dessus des autres de plusieurs bobines assemblées et éventuellement remplies, les nervures de renforcement de la première bride et de la seconde bride s'engagent les unes dans les autres de manière à établir une liaison par coopération de formes qui empêche un ripage des brides l'une par rapport à l'autre.

11. Bobine d'enroulement selon l'une quelconque au moins des revendications 1 à 10, caractérisée en ce que le noyau d'enroulement est réalisé sous forme cylindrique.

12. Bobine d'enroulement selon l'une quelconque au moins des revendications 1 à 10, caractérisée en ce que le noyau d'enroulement est réalisé sous forme conique.

13. Bobine d'enroulement selon l'une ou l'autre des revendications 11 et 12, caractérisée en ce que le noyau d'enroulement est divisible dans un plan qui comprend l'axe de rotation du noyau d'enroulement.

14. Bobine d'enroulement selon la revendication 13, caractérisée en ce qu'il est prévu à l'intérieur du noyau d'enroulement des nervures de renforcement qui dépassent vers l'intérieur et qui s'étendent en direction longitudinale ou en direction périphérique.

15. Bobine d'enroulement selon l'une ou l'autre des revendications 13 et 14, caractérisée en ce qu'il est prévu des moyens d'enclenchement qui provoquent un enclenchement des pièces individuelles du noyau d'enroulement les unes avec les autres.

16. Bobine d'enroulement selon l'une quelconque au moins des revendications 1 à 15, caractérisée en ce que le noyau d'enroulement (2 ; 52) et chaque bride sont constitués en matière plastique.

17. Bobine d'enroulement selon l'une quelconque au moins des revendications 1 à 16, caractérisée en ce que ledit élément de verrouillage (86) comprend une plaque oblongue (87).

18. Bobine d'enroulement selon la revendication 17, caractérisée en ce que ladite plaque est maintenue dans la bride dans une position qui est sensiblement parallèle à la surface, orientée vers la matière à embobiner, de la bride amovible (53).

19. Bobine d'enroulement selon l'une quelconque au moins des revendications 1 à 18, caractérisée en ce que dans la bride amovible (53) est prévu un évidement sensiblement circulaire (75) dans lequel est agencée une structure de maintien avec lesdites saillies de maintien (79).
